# EUROPEAN PATENT APPLICATION

(11) **EP 2 589 619 A1**
(43) Date of publication of application: **08.05.2013**
(21) Application number: 11800979.4
(22) Date of filing: 24.06.2011
(51) Int. Cl.: C08J 3/20, B60C 1/00, C08J 3/24, C08K 3/00, C08K 5/41, C08L 21/00

(54) **METHOD FOR USING S-(3-AMINOPROPYL)THIOSULFURIC ACID AND/OR METAL SALT THEREOF**

(30) Priority: 30.06.2010 JP 2010149034
(71) Applicant: Sumitomo Chemical Company Limited, Tokyo 104-8260 (JP)
(72) Inventor: UEKITA, Yasuo, Nishinomiya-shi Hyogo 669-1146 (JP); TAKEUCHI, Kenichi, Toyonaka-shi Osaka 560-0002 (JP); OHTA, Yoshiteru, Ikoma-gun Nara 636-0132 (JP)
(74) Representative: Brunetti, Fabrizio
(86) International application number: PCT/JP2011/065126
(87) International publication number: WO 2012/002517

(57) **Abstract**

A method for using S-(3-aminopropyl)thiosulfuric acid and/or a metal salt thereof added to a rubber component as a raw material of a vulcanized rubber composition, comprising
a pre-kneading step A of kneading a rubber component, a filler, S-(3-aminopropyl)thiosulfuric acid and/or a metal salt thereof,
a post-kneading step B of kneading the kneaded substance A obtained in the pre-kneading step A, a sulfur component, and a vulcanization accelerator having a weight over the weight of the above-described sulfur component, and
a thermal treatment step C of thermally-treating the kneaded substance B obtained in the post-kneading step B to obtain a vulcanized rubber composition, wherein durability is imparted to the vulcanized rubber composition;

## Description

### Technical Field

The present invention relates to a method for using S-(3-aminopropyl)thiosulfuric acid and/or a metal salt thereof.

### Background Art

Rubber compositions are used in various fields, and particularly, used as a raw material of an automobile tire. As the raw material of a tire, rubber compositions obtained by compounding various components in addition to rubber components such as natural rubber and synthetic rubbers are used. Examples of components other than rubber components include fillers such as carbon black, sulfur components necessary for vulcanization and vulcanization accelerators for promoting vulcanization. In addition to them, various substances are compounded for imparting a prescribed property to a rubber component. For example, JP-B No. 5-15173 discloses use of 6-aminohexylthiosulfuric acid S-ester as a substance for promoting adhesion between a rubber and a metal.

### Disclosure of the Invention

The present invention provides
<1> A method for using S-(3-aminopropyl)thiosulfuric acid and/or a metal salt thereof added to a rubber component as a raw material of a vulcanized rubber composition, comprising
   a pre-kneading step A of kneading a rubber component, a filler, and S-(3-aminopropyl)thiosulfuric acid and/or a metal salt thereof,
   a post-kneading step B of kneading the kneaded substance A obtained in the pre-kneading step A, a sulfur component, and a vulcanization accelerator having a weight over the weight of the above-described sulfur component, and
   a thermal treatment step C of thermally-treating the kneaded substance B obtained in the post-kneading step B to obtain a vulcanized rubber composition, wherein durability is imparted to the vulcanized rubber composition;
<2> The method for using according to <1>, wherein the weight of S-(3-aminopropyl)thiosulfuric acid and/or a metal salt thereof with respect to 1 part by weight of the sulfur component is 0.05 parts by weight or more and 2.5 parts by weight or less; and
<3> The method for using according to <1> or <2>, wherein the weight of the vulcanization accelerator with respect to 1 part by weight of the sulfur component is over 1 part by weight and 2 parts by weight or less.

### Best Modes for Carrying Out the Invention

The present invention is a method for using S-(3-aminopropyl)thiosulfuric acid and/or a metal salt thereof added to a rubber component as a raw material of a vulcanized rubber composition, comprising
a pre-kneading step A of kneading a rubber component, a filler and S-(3-aminopropyl)thiosulfuric acid and/or a metal salt thereof,
a post-kneading step B of kneading the kneaded substance A obtained in the pre-kneading step A, a sulfur component, and a vulcanization accelerator having a weight over the weight of the above-described sulfur component, and
a thermal treatment step C of thermally-treating the kneaded substance B obtained in the post-kneading step B to obtain a vulcanized rubber composition, wherein durability is imparted to the vulcanized rubber composition.

First, components used in the pre-kneading step A, the post-kneading step B and the thermal treatment step C will be illustrated.

### [Rubber component]

The rubber component is used in the pre-kneading step A.

The rubber component includes various synthetic rubbers such as styrene-butadiene copolymerized rubber (SBR), polybutadiene rubber (BR), polyisoprene rubber (IR), acrylonitrile-butadiene copolymerized rubber (NBR), isoprene-isobutylene copolymerized rubber (IIR), ethylene-propylene-diene copolymerized rubber (EPDM) and halogenated butyl rubber (HR), in addition to natural rubber, epoxidized natural rubber, deproteinized natural rubber and other modified natural rubbers. Among them, preferably used are highly unsaturated rubbers such as natural rubber, styrene-butadiene copolymerized rubber and polybutadiene rubber, and natural rubber is more preferable. It is also effective to use several rubber components in combination, such as a combined use of natural rubber and styrene-butadiene copolymerized rubber and a combined use of natural rubber and polybutadiene rubber.

Specific examples of natural rubber include grades such as RSS#1, RSS#3, TSR20, SIR20 and SMR20.

As the epoxidized natural rubber, those having a degree of epoxidization of 10 to 60 mol% are preferable and examples thereof include ENR25 and ENR50 manufactured by Kumpulan Guthrie. As the deproteinized natural rubber, deproteinized natural rubbers having a total nitrogen content of 0.3 wt% or less are preferable.

As the modified natural rubber, preferable are modified natural rubbers containing a polar group obtained by previously reacting 4-vinylpyridine, N,N-dialkylaminoethyl acrylate (for example, N,N-diethylaminoethyl acrylate), 2-hydroxy acrylate or the like with natural rubber.

Specific examples of SBR include emulsion-polymerized SBR and solution-polymerized SBR described in "Rubber Industry Handbook <fourth edition>", p. 210 to 211, edited by The Society of Rubber Science and Technology, Japan. In particular, solution-polymerized SBR is preferably used as a rubber component of a tread rubber composition. Particularly preferably used are commercially available products of solution-polymerized SBR having a molecular end modified by using 4,4'-bis-(dialkylamino)benzophenone such as "Nipol (registered trademark) NS116" manufactured by Zeon Corporation, solution-polymerized SBR having a molecular end modified by using a halogenated tin compound such as "SL574" manufactured by JSR, and silane-modified solution-polymerized SBR such as "E10" and "E15" manufactured by Asahi Kasei Corporation, and solution-polymerized SBR having any of nitrogen, tin and silicon or two or more elements of them at a molecular end obtained by modifying the molecular end by using any one of a lactam compound, an amide compound, an urea compound, an N,N-dialkylacrylamide compound, an isocyanate compound, an imide compound, a silane compound having an alkoxy group (trialkoxysilane compound and the like) and an aminosilane compound or using two or more of the above-described mutually different compounds, such as a tin compound and a silane compound having an alkoxy group and an alkylacrylamide compound and a silane compound having an alkoxy group. Oil extended SBR obtained by adding an oil such as a process oil and an aroma oil to emulsion-polymerized SBR and solution-polymerized SBR after polymerization is preferable as a rubber component of a tread rubber composition and the like.

Specific examples of BR include solution-polymerized BR such as high-cis BR having a proportion of cis-1,4-coupling of 90% or more and low-cis BR having a proportion of cis coupling of around 35%, and low-cis BR having a high vinyl content is preferable. Particularly preferable are tin-modified BR such as "Nipol (registered trademark) BR1250H" manufactured by Zeon Corporation, and solution-polymerized BR having any of nitrogen, tin and silicon or two or more elements of them at a molecular end obtained by modifying the molecular end by using any one of 4,4'-bis-(dialkylamino)benzophenone, a halogenated tin compound, a lactam compound, an amide compound, an urea compound, an N,N-dialkylacrylamide compound, an isocyanate compound, an imide compound, a silane compound having an alkoxy group (trialkoxysilane compound and the like) and an aminosilane compound or using two or more of the above-described mutually different compounds, such as a tin compound and a silane compound having an alkoxy group and an alkylacrylamide compound and a silane compound having an alkoxy group. These BRs are preferable as a rubber composition for a tread rubber composition and a rubber composition for a side wall, and usually blended with SBR and/or natural rubber to use. Regarding the blending ratio thereof, it is preferable that the proportion of SBR and/or natural rubber is 60 to 100 wt% and the proportion of BR is 0 to 40 wt% with respect to the total rubber weight for a tread rubber composition, and it is preferable that the proportion of SBR and/or natural rubber is 10 to 70 wt% and the proportion of BR is 90 to 30 wt% with respect to the total rubber weight for a side wall rubber composition, and blends in which the proportion of natural rubber is 40 to 60 wt% and the proportion of BR is 60 to 40 wt% with respect to the total rubber weight are more preferable. In this case, also preferable are a blend of modified SBR and unmodified SBR and a blend of modified BR and unmodified BR.

### [Filler]

A filler is used in the pre-kneading step A.

The filler includes those usually used in the field of rubber such as carbon black, silica, talc, clay, aluminum hydroxide and titanium oxide, and carbon black and silica are preferable and carbon black is more preferable. Specific examples of carbon black include those described in "Rubber Industry Handbook <fourth edition>", p. 494, edited by The Society of Rubber Science and Technology, Japan. Among them, preferable are carbon black such as HAF (High Abrasion Furnace), SAF (Super Abrasion Furnace), ISAF (Intermediate SAF), FEF (Fast Extrusion Furnace), MAF, GPF (General Purpose Furnace) and SRF (Semi-Reinforcing Furnace). As the filler for a tire tread rubber composition, carbon black having a CTAB (Cetyl Tri-methyl Ammonium Bromide) surface area of 40 to 250 m²/g, a nitrogen adsorption specific surface area of 20 to 200 m²/g and a particle size of 10 to 50 nm is preferably used, and carbon black having a CTAB surface area of 70 to 180 m²/g, a nitrogen adsorption specific surface area of 20 to 200 m²/g and a particle size of 10 to 50 nm is more preferable.

Specific examples thereof include N110, N220, N234, N299, N326, N330, N330T, N339, N343 and N351 according to the standard of ASTM. A surface-treated carbon black obtained by adhering silica in an amount of 0.1 to 50 wt% to the surface of carbon black is also preferable. It is also effective to use several kinds of fillers in combination, such as a combined use of carbon black and silica. It is preferable to use carbon black singly or to use both carbon black and silica, in a tire tread rubber composition. For a carcass or side wall rubber composition, carbon black having a CTAB surface area of 20 to 60 m²/g and a particle size of 40 to 100 nm is preferably used, and specific examples thereof include N330, N339, N343, N351,N550, N568, N582, N630, N642, N660, N662, N754 and N762 according to the standard of ASTM.

The use amount of such fillers is preferably in the range of 5 to 100 parts by weight per 100 parts by weight of the rubber component. In the case of use of carbon black singly as the filler, the use amount thereof is more preferably in the range of 30 to 80 parts by weight, and in the case of use thereof together with silica in a tread member application, the use amount thereof is more preferably in the range of 5 to 50 parts by weight.

The silica includes those having a CTAB surface area of 50 to 180 m²/g or a nitrogen adsorption specific surface area of 50 to 300 m²/g, and commercially available products such as "AQ" and "AQ-N" manufactured by Tosoh Silica Corporation, "Ultrasil (registered trademark) VN3", "Ultrasil (registered trademark) 360" and "Ultrasil (registered trademark) 7000" manufactured by Degussa, "Zeosil (registered trademark) 115GR", "Zeosil (registered trademark) 1115MP", "Zeosil (registered trademark) 1205MP" and "Zeosil (registered trademark) Z85MP" manufactured by Rhodia and "Nipseal (registered trademark) AQ" manufactured by Nippon Silica Industry Co., Ltd. are preferably used. It is also preferable to compound silica having a pH of 6 to 8, silica containing sodium in an amount of 0.2 to 1.5 wt%, micro-spherical silica having a circularity of 1 to 1.3, silicone oils such as a dimethyl silicone oil, organosilicon compounds containing an ethoxysilyl group, silica surface-treated with an alcohol such as ethanol and polyethylene glycol and silica having two or more different nitrogen adsorption specific surface areas.

In a passenger automobile tread rubber composition, silica is preferably used, and the use amount thereof is preferably in the range of 10 to 120 parts by weight per 100 parts by weight of the rubber component. When compounding silica, it is preferable to further compound 5 to 50 parts by weight of carbon black, and the compounding ratio of silica/carbon black is particularly preferably 0.7/1 to 1/0.1. When silica is used as the filler, it is preferable to add a compound having an element linkable to silica, such as silicon or a compound having a functional group such as alkoxysilane, such as one or more silane coupling agents selected from the group consisting of bis(3-triethoxysilylpropyl) tetrasulfide ("Si-69" manufactured by Degussa), bis(3-triethoxysilylpropyl) disulfide ("Si-75" manufactured by Degussa), bis(3-diethoxymethylsilylpropyl) tetrasulfide, bis(3-diethoxymethylsilylpropyl) disulfide, octanethioic acid S-[3-(triethoxysilyl)propyl] ester ("NXT Silane" manufactured by General Electric Silicones), octanethioic acid S-[3-{(2-methyl-1,3-propanedialkoxy)ethoxysilyl}propyl] ester and octanethioic acid S-[3-{(2-methyl-1,3-propanedialkoxy)methylsilyl}propyl] ester phenyltriethoxysilane, methyltrimethoxysilane, methyltriethoxysilane, methyltriacetoxysilane, methyltributoxysilane, ethyltrimethoxysilane, ethyltriethoxysilane, isobutyltrimethoxysilane, isobutyltriethoxysilane, n-octyltrimethoxysilane, n-octyltriethoxysilane, vinyltrimethoxysilane, vinyltriethoxysilane, vinyltri(methoxyethoxy)silane, phenyltrimethoxysilane, phenyltriethoxysilane, phenyltriacetoxysilane, 3-methacryloxypropyltrimethoxysilane, 3-methacryloxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, (3-glycidoxypropyl)trimethoxysilane, (3-glycidoxypropyl)triethoxysilane, 2-(3,4-epoxycyclohexyl)ethyltrimethoxysilane, 2-(3,4-epoxycyclohexyl)ethyltriethoxysilane, 3-isocyanatepropyltrimethoxysilane and 3-isocyanatepropyltriethoxysilane, and particularly preferable are bis(3-triethoxysilylpropyl) tetrasulfide ("Si-69" manufactured by Degussa), bis(3-triethoxysilylpropyl) disulfide ("Si-75" manufactured by Degussa) and 3-octanoylthiopropyltriethoxysilane ("NXT silane" manufactured by General Electric Silicones). These compounds are preferably compounded into a rubber component simultaneously with silica, and the compounding amount thereof is preferably 2 to 10 wt% and more preferably 7 to 9 wt% with respect to silica. In the case of compounding these compounds, the compounding temperature is preferably 80 to 200°C and more preferably 110 to 180°C. When silica is used as the filler, it is also preferable to compound a mono-hydric alcohol such as ethanol, butanol and octanol, a di- or more-hydric alcohol such as ethylene glycol, diethylene glycol,triethylene glycol, polyethylene glycol, polypropylene glycol, pentaerythritol and polyether polyol , an N-alkylamine, an amino acid, liquid polybutadiene having a carboxyl- or amine-modified molecular end, and the like, in addition to silica and a compound having an element linkable to silica, such as silicon or having a functional group such as alkoxysilane.

Aluminum hydroxide includes those having a nitrogen adsorption specific surface area of 5 to 250 m²/g and a DOP feeding amount 50 to 100 ml/100 g.

### [S-(3-aminopropyl)thiosulfuric acid and/or metal salt thereof]

S-(3-aminopropyl)thiosulfuric acid used in the pre-kneading step A is a compound represented by the following formula (1):

H₂N-(CH₂)₃-SSO₃H (1)

and the metal salt thereof is a compound represented by the following formula (2):

(H₂N-(CH₂)₃-SSO₃)ₙ·Mⁿ⁺ (2)

(wherein, Mⁿ⁺ represents a metal ion and n represents its valency).

As the metal ion represented by Mⁿ⁺, a lithium ion, a sodium ion, a potassium ion, a cesium ion, a cobalt ion, a copper ion or a zinc ion is preferable, and a lithium ion, a sodium ion or a potassium ion is more preferable. In formula (2), n represents the valency of the metal ion, and is not restricted providing that the metal ion can take such valency. For example, in the case of an alkali metal ion such as a lithium ion, a sodium ion, a potassium ion and a cesium ion, n is 1, in the case of a cobalt ion, n is 2 or 3, in the case of a copper ion, n is 1, 2 or 3 and in the case of a zinc ion, n is 2.

The use amount of S-(3-aminopropyl)thiosulfuric acid and/or a metal salt thereof is preferably 0. 05 parts by weight or more and 2.5 parts by weight or less with respect to 1 part by weight the sulfur component. In the above-described range, the durability is further imparted to a vulcanized rubber composition.

In the case of compounding S-(3-aminopropyl)thiosulfuric acid and/or a metal salt thereof in the pre-kneading step A, the compounding temperature is preferably in the range of 80°C or higher and 200°C or lower and more preferably in the range of 110°C or higher and 180°C or lower.

The median diameter of S-(3-aminopropyl)thiosulfuric acid or metal salt thereof is preferably 0.05 to 100 µm and more preferably 1 to 100 µm. The median diameter can be measured by a laser diffraction method.

The metal salt of S-(3-aminopropyl)thiosulfuric acid can be produced by any known methods such as a method of reacting 3-halopropylamine with sodium thiosulfate; and a method of reacting phthalimide potassium salt with 1,3-dihalopropane, reacting the obtained compound with sodium thiosulfate, then, hydrolyzing the obtained compound. According to the above-described production methods, a sodium salt of S-(3-aminopropyl)thiosulfuric acid is usually obtained, and it can be converted into a metal salt other than a sodium salt by cation exchange. S-(3-aminopropyl)thiosulfuric acid can be produced by neutralizing the metal salt of S-(3-aminopropyl)thiosulfuric acid using a protonic acid.

S-(3-aminopropyl)thiosulfuric acid may be used alone, and the metal salt thereof may be used alone. Further, a plurality of metal salts may be used in combination, and a mixture of S- (3-aminopropyl) thiosulfuric acid and a metal salt thereof may be used. The above-described mixture can be produced by, for example, a method of mixing S-(3-aminopropyl)thiosulfuric acid and a metal salt thereof; a method of converting a part of S- (3-aminopropyl) thiosulfuric acid into a metal salt using a metal alkali (hydroxide, carbonate, hydrogen carbonate and the like containing the above-described metal represented by M); a method of neutralizing a part of a metal salt of S-(3-aminopropyl)thiosulfuric acid using a protonic acid; and the like. Thus produced S-(3-aminopropyl)thiosulfuric acid or metal salt thereof can be isolated by an operation such as concentration and crystallization, and the isolated S-(3-aminopropyl)thiosulfuric acid or metal salt thereof usually contains water in an amount of about 0.1% to 5%.

S- (3-aminopropyl) thiosulfuric acid and/or a metal salt thereof can also be previously compounded with a supporting agent. Such a supporting agent includes fillers noted above and "inorganic fillers, reinforcing agents" described in "Rubber Industry Handbook <fourth edition>", pp. 510 to 513, edited by The Society of Rubber Science and Technology, Japan. Among them, preferable are carbon black, silica, calcined clay and aluminum hydroxide. The use amount of such a supporting agent is preferably 10 parts by weight or more and 1000 parts by weight or less per 100 parts by weight of S-(3-aminopropyl)thiosulfuric acid and/or a metal salt thereof.

### [Zinc oxide]

In the pre-kneading step A, it is preferable to knead zinc oxide together with a rubber component. The use amount of zinc oxide is preferably 1 part by weight or more and 15 parts by weight or less and more preferably 3 parts by weight or more and 8 parts by weight or less per 100 parts by weight of the rubber component.

### [Viscoelasticity improving agent]

It is possible that an agent for improving a viscoelastic property (viscoelasticity improving agent) conventionally used in the field of rubber is compounded and kneaded in the pre-kneading step A. The viscoelasticity improving agent may be added when necessary. It is also possible that the viscoelasticity improving agent is compounded and kneaded in the post-kneading step B. Further, it is also possible that the viscoelasticity improving agent is compounded and kneaded in both the pre-kneading step A and the post-kneading step B.

The viscoelasticity improving agent includes N,N'-bis(2-methyl-2-nitropropyl)-1,6-hexanediamine ("Sumifine (registered trademark) 1162" manufactured by Sumitomo Chemical Co., Ltd.), dithiouracil compounds described in JP-A No. 63-23942, nitrosoquinoline compounds such as 5-nitroso-8-hydroxyquinoline (NQ-58) described in JP-A No. 60-82406, alkylphenol-sulfur chloride condensates described in JP-A No. 2009-138148 such as "TACKIROLL (registered trademark) AP, V-200" manufactured by Taoka Chemical Co., Ltd. and "Vultac 2, 3, 4, 5, 7, 710" manufactured by PennWalt Corporation; silane coupling agents such as bis(3-triethoxysilylpropyl) tetrasulfide ("Si-69" manufactured by Degussa), bis(3-triethoxysilylpropyl) disulfide ("Si-75" manufactured by Degussa), bis(3-diethoxymethylsilylpropyl) tetrasulfide, bis(3-diethoxymethylsilylpropyl) disulfide, octanethioic acid S-[3-(triethoxysilyl)propyl] ester , octanethioic acid S-[3-{(2-methyl-1,3-propanedialkoxy)ethoxysilyl}propyl] ester and octanethioic acid S-[3-{(2-methyl-1,3-propanedialkoxy)methylsilyl}propyl] ester phenyltriethoxysilane, methyltrimethoxysilane, methyltriethoxysilane, methyltriacetoxysilane, methyltribotuxysilane, ethyltrimethoxysilane, ethyltriethoxysilane, isobutyltrimethoxysilane, isobutyltriethoxysilane, n-octyltrimethoxysilane, n-octyltriethoxysilane, vinyltrimethoxysilane, vinyltriethoxysilane, vinyltri(methoxyethoxy)silane, phenyltrimethoxysilane, phenyltriethoxysilane, phenyltriacetoxysilane, 3-methacryloxypropyltrimethoxysilane, 3-methacryloxypropyltriethoxysilane, 3-aminopropyltrimethoxysilane, 3-aminopropyltriethoxysilane, N-(2-aminoethyl)-3-aminopropyltrimethoxysilane, N-(2-aminoethyl)-3-aminopropyltriethoxysilane, (3-glycidoxypropyl)trimethoxysilane, (3-glycidoxypropyl)triethoxysilane, 2-(3,4-epoxycyclohexyl)ethyltrimethoxysilane, 2-(3,4-epoxycyclohexyl)ethyltriethoxysilane, 3-isocyanatepropyltrimethoxysilane and 3-isocyanatepropyltriethoxysilane; 1,6-bis(N,N'-dibenzylthiocarbamoyldithio)hexane ("KA9188" manufactured by Bayer), 1,6-hexamethylene dithiosulfate disodium salt dihydrate, 1,3-biscitraconimidemethylbenzene ("Perkalink 900" manufactured by Flexsys), 1-benzoyl-2-phenyl hydrazide; carboxylic acid hydrazide derivatives such as 1- or 3-hydroxy-N'-(1-methylethylidene)-2-naphthoic acid hydrazide, 1- or 3-hydroxy-N'-(1-methylpropylidene)-2-naphthoic acid hydrazide, 1- or 3-hydroxy-N'-(1,3-dimethylbutylidene)-2-naphthoic acid hydrazide and 1- or 3-hydroxy-N'-(2-furylmethylene)-2-naphthoic acid hydrazide described in JP-A No. 2004-91505, 3-hydroxy-N'-(1,3-dimethylbutylidene)-2-naphthoic acid hydrazide, 3-hydroxy-N'-(1,3-diphenylethylidene)-2-naphthoic acid hydrazide and 3-hydroxy-N'-(1-methylethylidene)-2-naphthoic acid hydrazide described in JP-A No. 2000-190704, bismercaptooxadiazole compounds described in JP-A No. 2006-328310, pyrithione salt compounds described in JP-A No. 2009-40898, and cobalt hydroxide compounds described in JP-A No. 2006-249361.

Among them, preferable are N,N'-bis(2-methyl-2-nitropropyl)-1,6-hexanediamine ("Sumifine (registered trademark) 1162" manufactured by Sumitomo Chemical Co., Ltd.), 5-nitroso-8-hydroxyquinoline (NQ-58), bis(3-triethoxysilylpropyl) tetrasulfide ("Si-69" manufactured by Degussa), bis(3-triethoxysilylpropyl) disulfide ("Si-75" manufactured by Degussa), 1,6-bis(N,N'-dibenzylthiocarbamoyldithio)-hexane ("KA9188" manufactured by Bayer), hexamethylene bisthiosulfate disodium salt dihydrate, 1,3-biscitraconimidemethylbenzene ("Perkalink 900" manufactured by Flexsys), and alkylphenol-sulfur chloride condensates such as "TACKIROLL (registered trademark) AP, V-200" manufactured by Taoka Chemical Co., Ltd..

The use amount of the viscoelasticity improving agent is preferably in the range of 0.1 part by weight or more and 10 parts by weight or less per 100 parts by weight of the rubber component. In the above-described range, the effect of imparting durability can be obtained efficiently.

### [Sulfur component]

A sulfur component is used in the post-kneading step B.

The sulfur component includes powdered sulfur, precipitated sulfur, colloidal sulfur, insoluble sulfur and highly dispersible sulfur. Powdered sulfur is preferable, and in the case of use in a tire member having a large sulfur content such as a belt member, insoluble sulfur is preferable. In the present specification, the sulfur component does not include S-(3-aminopropyl)thiosulfuric acid, metal salt thereof and a vulcanization accelerator.

The use amount of the sulfur component is preferably 0.3 parts by weight or more and 5.0 parts by weight or less and more preferably 0.5 parts by weight or more and 3.0 parts by weight or less per 100 parts by weight of the rubber component. In the above-described range, the effect of imparting durability can be obtained efficiently.

### [Vulcanization accelerator]

The vulcanization accelerator includes thiazole vulcanization accelerators, sulfenamide vulcanization accelerators and guanidine vulcanization accelerators described in Rubber Industry Handbook <fourth edition>, pp. 412 to 413 (published by The Society of Rubber Science and Technology, Japan on January 20-th, 1994).

Specific examples thereof include N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS), 2-mercaptobenzothiazole (MBT), dibenzothiazyl disulfide (MBTS) and diphenylguanidine (DPG). Morpholine disulfide which is a known vulcanizing agent can also be used.

When carbon black is used as the filler, it is preferable to use N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS) or dibenzothiazyl disulfide (MBTS) together with diphenylguanidine (DPG). When silica and carbon black are used in combination as the filler, it is preferable to use any of N-cyclohexyl-2-benzothiazolylsulfenamide (CBS), N-tert-butyl-2-benzothiazolylsulfenamide (BBS), N,N-dicyclohexyl-2-benzothiazolylsulfenamide (DCBS) and dibenzothiazyl disulfide (MBTS) together with diphenylguanidine (DPG). In the present specification, the vulcanization accelerator does not include S- (3-aminopropyl) thiosulfuric acid and a metal salt thereof.

The use amount of the vulcanization accelerator is a weight over the weight of the sulfur component, that is, it is over 1 part by weight with respect to 1 part by weight of the sulfur component. In other words, the ratio of sulfur/vulcanization accelerator is less than 1. Vulcanization at this weight ratio is called EV vulcanization.

Since the use amount of the vulcanization accelerator is a weight over the weight of the sulfur component, the effect of imparting durability to a vulcanized rubber composition using S- (3-aminopropyl) thiosulfuric acid and/or a metal salt thereof can be obtained. If the use amount of the vulcanization accelerator is 1 part by weight or less with respect to 1 part by weight of the sulfur component, it is impossible to impart durability to a vulcanized rubber composition even if S-(3-aminopropyl)thiosulfuric acid and/or a metal salt thereof is used.

While the upper limit of the use amount of the vulcanization accelerator is not restricted, the use amount of the vulcanization accelerator is preferably over 1 part by weight and 2 parts by weight or less with respect to 1 part by weight of the sulfur component. If the upper limit is 2 parts by weight, durability against heat can be imparted to a vulcanized rubber composition. Further, a possibility of shortening of the fatigue life of the resulting vulcanized rubber composition can also be avoided.

While the lower limit of the use amount of the vulcanization accelerator is also not restricted, it is preferably 1.1 parts by weight or more, more preferably 1.2 parts by weight or more and further preferably 1.5 parts by weight or more with respect to 1 part by weight of the sulfur component. When the lower limit is the above-described value, the effect of imparting durability to a vulcanized rubber composition in the case of use of S-(3-aminopropyl)thiosulfuric acid and/or a metal salt thereof in kneading can be further enhanced.

### [Other compounding agents]

Various compounding agents which can be compounded in the pre-kneading step A and/or the post-kneading step B in addition to the above-described components are shown below. Such compounding agents include anti-aging agents; oils ; fatty acids such as stearic acid; coumarone-indene resins such as Coumarone resin NG4 (softening point: 81 to 100°C) manufactured by Nippon Steel Chemical Industries, Co., Ltd. and Process resin AC5 (softening point: 75°C) manufactured by Kobe Oil Chemical Industrial Co., Ltd.; terpene resins such as a terpene resin, a terpene-phenol resin and an aromatic modified terpene resin; rosin derivatives such as "Nicanol (registered trademark) A70" (softening point: 70 to 90°C) manufactured by Mitsubishi Gas Chemical Company, Inc.; hydrogenated rosin derivatives; novolak alkylphenol resins; resol alkylphenol resins; C5 type petroleum resins; and liquid polybutadiene.

The oil includes process oils and vegetable fats. The process oil includes paraffin process oils, naphthene process oils and aromatic process oils.

The anti-aging agent includes those described in "Rubber Industry Handbook <fourth edition>", p. 436 to 443, edited by The Society of Rubber Science and Technology, Japan. Particularly, preferable are N-phenyl-N'-1,3-dimethylbutyl-p-phenylenediamine (6PPD), a reaction product of aniline and acetone (TMDQ), poly(2,2,4-trimethyl-1,2-)dihydroquinoline ("Antioxidant FR" manufactured by Matsubara Industries, Inc.), synthetic waxes (paraffin wax and the like) and vegetable waxes.

Peptizers and retarders may be compounded and kneaded, and further, general various rubber chemicals and softeners and the like may be compounded and kneaded as necessary.

The retarder includes phthalic anhydride, benzoic acid, salicylic acid, N-nitrosodiphenylamine, N-(cyclohexylthio)-phthalimide (CTP), sulfoneamide derivatives, diphenylurea and bis(tridecyl)pentaerythritol diphosphite, and N-(cyclohexylthio)-phthalimide (CTP) is preferably used.

The retarder may be compounded and kneaded in the pre-kneading step A. It is preferable that the retarder is compounded and kneaded in the post-kneading step B. The use amount of the retarder is preferably in the range of 0.01 to 1 part by weight and more preferably in the range of 0.05 to 0.5 parts by weight per 100 parts by weight of the rubber component.

### [Combination of components]

According to the method of the present invention, a vulcanized rubber composition which can be used in various applications can be obtained, by compounding and kneading components such as the above-described rubber component in the pre-kneading step A and the post-kneading step B, and thermally treating the kneaded substance B obtained in the post-kneading step B in the thermal treatment step C.

As the rubber component in a rubber compounding suitable for a tread member suitable for truck, bus, light truck and construction large tires, natural rubber alone or a blend with SBR and/or BR, containing natural rubber as the main component is preferble. As the filler, carbon black alone or a blend with carbon black, containing silica as the main component is preferably used. Further, it is preferable to use a viscoelasticity improving agent together, such as N,N'-bis(2-methyl-2-nitropropyl)-1,6-hexanediamine ("Sumifine (registered trademark) 1162" manufactured by Sumitomo Chemical Co., Ltd.), 5-nitroso-8-hydroxyquinoline (NQ-58), bis(3-triethoxysilylpropyl) tetrasulfide (Si-69), bis(3-triethoxysilylpropyl) disulfide (Si-75), 1,6-bis(N,N'-dibenzylthiocarbamoyldithio)-hexane ("KA9188" manufactured by Bayer), hexamethylene bisthiosulfate disodium salt dihydrate, 1,3-biscitraconimidemethylbenzene ("Perkalink 900" manufactured by Flexsys) and alkylphenol-sulfur chloride condensates such as "TACKIROLL (registered trademark) AP, V-200" manufactured by Taoka Chemical Co., Ltd..

As the rubber component in a rubber compounding suitable for a tread member suitable for a passenger automobile tire, solution-polymerized SBR alone having a molecular end modified with a silicon compound or a blend with at least one rubber selected from the group consisting of unmodified solution-polymerized SBR, emulsion-polymerized SBR, natural rubber and BR, containing the above-described end-modified solution-polymerized SBR as the main component is preferable. As the filler, a blend with carbon black, containing silica as the main component is preferably used. Further, it is preferable to use a viscoelasticity improving agent together, such as N,N'-bis(2-methyl-2-nitropropyl)-1,6-hexanediamine ("Sumifine (registered trademark) 1162" manufactured by Sumitomo Chemical Co., Ltd.), 5-nitroso-8-hydroxyquinoline (NQ-58), bis(3-triethoxysilylpropyl) tetrasulfide (Si-69), bis(3-triethoxysilylpropyl) disulfide (Si-75), 1,6-bis(N,N'-dibenzylthiocarbamoyldithio)-hexane ("KA9188" manufactured by Bayer), hexamethylene bisthiosulfate disodium salt dihydrate, 1,3-biscitraconimidemethylbenzene ("Perkalink 900" manufactured by Flexsys) and alkylphenol-sulfur chloride condensates such as "TACKIROLL (registered trademark) AP, V-200" manufactured by Taoka Chemical Co., Ltd..

As the rubber component in a rubber compounding suitable for a side wall member, a blend with at least one rubber selected from the group consisting of unmodified solution-polymerized SBR, emulsion-polymerized SBR and natural rubber, containing BR as the main component is preferable. As the filler, carbon black alone or a blend with silica, containing carbon black as the main component is preferably used. Further, it is preferable to use a viscoelasticity improving agent together, such as N,N'-bis(2-methyl-2-nitropropyl)-1,6-hexanediamine ("Sumifine (registered trademark) 1162" manufactured by Sumitomo Chemical Co., Ltd.), 5-nitroso-8-hydroxyquinoline (NQ-58), bis(3-triethoxysilylpropyl) tetrasulfide (Si-69), bis(3-triethoxysilylpropyl) disulfide (Si-75), 1,6-bis(N,N'-dibenzylthiocarbamoyldithio)-hexane ("KA9188" manufactured by Bayer), hexamethylene bisthiosulfate disodium salt dihydrate, 1,3-biscitraconimidemethylbenzene ("Perkalink 900" manufactured by Flexsys) and alkylphenol-sulfur chloride condensates such as "TACKIROLL (registered trademark) AP, V-200" manufactured by Taoka Chemical Co., Ltd..

As the rubber component in a rubber compounding suitable for a carcass and belt member, natural rubber alone or a blend with BR, containing natural rubber as the main component is preferable. As the filler, carbon black alone or a blend with silica, containing carbon black as the main component is preferably used. Further, it is preferable to use a viscoelasticity improving agent together, such as N,N'-bis(2-methyl-2-nitropropyl)-1,6-hexanediamine ("Sumifine (registered trademark) 1162" manufactured by Sumitomo Chemical Co., Ltd.), 5-nitroso-8-hydroxyquinoline (NQ-58), bis(3-triethoxysilylpropyl) tetrasulfide (Si-69), bis(3-triethoxysilylpropyl) disulfide (Si-75), 1,6-bis(N,N'-dibenzylthiocarbamoyldithio)-hexane ("KA9188" manufactured by Bayer), hexamethylene bisthiosulfate disodium salt dihydrate, 1,3-biscitraconimidemethylbenzene ("Perkalink 900" manufactured by Flexsys) and alkylphenol-sulfur chloride condensates such as "TACKIROLL (registered trademark) AP, V-200" manufactured by Taoka Chemical Co., Ltd..

### [Pre-kneading step A]

The pre-kneading step A is a step of kneading a rubber component, a filler, S-(3-aminopropyl)thiosulfuric acid and/or a metal salt thereof, and a kneaded substance A is obtained.

As an apparatus for kneading components, a Banbury mixer is noted.

The revolution of a mixer in kneading varies depending on the kind of a rubber component used and a desired molecular weight thereof, and is in general 10 rpm or more and 100 rpm or less. Also the kneading time may be appropriately set, and is in general 1 minute or more and 20 minutes or less. In the pre-kneading step A, a kneaded substance A can be obtained by kneading components such as a rubber component. In the pre-kneading step A, it is preferable to perform kneading while heating components by heating the mixer, or the like. The temperature of components such as a rubber component rises by heat generation due to kneading (or is maintained at prescribed temperature). The discharging temperature of the kneaded substance A is preferably 200°C or lower and more preferably 120°C or higher and 180°C or lower.

In the case of use of natural rubber as a rubber component, the pre-kneading step A may contain a step of masticating the rubber component as a pre-stage for kneading. By mastication, the molecular chain of natural rubber is cut, and processing of natural rubber becomes easy.

### [Post-kneading step B]

The post-kneading step B is a step of kneading the kneaded substance A obtained in the pre-kneading step A, a sulfur component and a vulcanization accelerator, and a kneaded substance B is obtained. It is preferable to carry out the post-kneading step B quickly after completion of kneading in the pre-kneading step A.

As an apparatus for kneading components, open mixers and Banbury mixers are noted.

The kneading time in the post-kneading step B may be appropriately set depending on the kind of components such as a rubber component. The temperature condition of the mixer, namely the kneading temperature is preferably 60°C or higher and 120°C or lower, depending on the kind of a rubber component and the like.

### [Processing step of kneaded substance B]

The method of the present invention may contain a processing step (b) of processing the kneaded substance B obtained in the post-kneading step B into a specific condition, between the post-kneading step B and the thermal treatment step C. By the processing step (b), a pre-molded body is obtained, and the pre-molded body is made into a molded body by thermal treatment in the thermal treatment step C described later.

"The step of processing the kneaded substance B into a specific condition" includes "a step of coating the kneaded substance B on a steel cord", "a step of coating the kneaded substance B on a carcass fiber cord" and "a step of processing the kneaded substance B into the shape of a tread member", in the field of a tire. The processing includes a step of molding the kneaded substance B.

Members such as a belt, a carcass, an inner liner, a side wall and a tread (cap tread or under tread) obtained by these steps are, usually, further molded into the shape of a tire, together with other members, by methods usually conducted in the field of a tire, that is, a step of incorporating the kneaded substance B into a tire is carried out, to give the condition of a green tire containing the kneaded substance B.

### [Thermal treatment step C]

The thermal treatment step C is carried out after the post-kneading step B or the processing step (b). The kneaded substance B obtained in the above-described post-kneading step B or the pre-molded body obtained in the processing step (b) is subjected to the thermal treatment in the thermal treatment step C. Such a thermal treatment is usually carried out at normal pressure or under increased pressure.

The temperature condition in the thermal treatment of the thermal treatment step C is preferably 120°C or higher and 180°C or lower. When lower than 120°C, the vulcanization speed becomes slow, and it possibly becomes difficult to judge the degree of progress of vulcanization. When over 180°C, the vulcanization speed becomes quick, and it possibly becomes difficult to control the progressing speed of vulcanization. The suitable heating time in the thermal treatment (vulcanization time) varies depending on the specific composition of a rubber composition.

By the above-described thermal treatment, a vulcanized rubber composition can be obtained from the kneaded substance B obtained in the post-kneading step B. On the other hand, when the thermal treatment is carried out after the processing step (b), a molded body is obtained from a pre-molded body.

As an apparatus used for the thermal treatment in the thermal treatment step C, a vulcanizing machine, a vulcanizing press and a pressurization press are noted.

A pneumatic tire can be produced by a usual method using the obtained vulcanized rubber composition. That is, the rubber composition at a stage before the above-described thermal treatment step C is extrusion-processed into a tread member, and the tread member is pasted by a usual method on a tire molding machine to mold a green tire, and this green tire is heated and pressed in a vulcanizing machine, to obtain a tire. Thus obtained tire is excellent in tensile properties, and endowed with durability. Therefore, the product life cycle of the above-described tire is long, and consequently, the amount of tires to be discarded or recycled can be reduced. That is, the environmental load can be alleviated by the method of the present invention.

### [Physical property of vulcanized rubber composition]

The physical properties of a vulcanized rubber composition are shown below.

### <Tensile property (durability test)>

The tensile properties of a vulcanized rubber composition include TS and EB.

TS represents the tensile strength according to the definition of JIS, and is obtained by dividing the maximum tensile force recorded when a test piece is pulled until breakage by the initial cross-sectional area of the test piece. In the present specification, ΔTS is represented by {( TS of test piece after aging test) - (TS of initial test piece) }/(TS of initial test piece) }×100(%).

EB represents the elongation at breakage according to the definition of JIS, and is represented by the ratio (%) of an elongation recorded when a test piece is pulled until breakage to the initial length of the test piece. In the present specification, ΔEB is presented by { (EB of test piece after aging test) - (EB of initial test piece) }/ (EB of initial test piece) }×100(%).

The above-described "test piece after aging test" denotes a test piece after leaving at 100°C for 72 hours using a test piece having the shape of dumbbell No. 3 according to JIS K 6257 method A-2. The above-described "initial test piece" denotes a test piece having the shape of dumbbell No. 3 at normal temperature (25°C) and normal pressure (1 atm).

When ΔTS is closer to 0%, a vulcanized rubber composition is more scarcely affected in the tensile strength by a change in temperature. ΔTS is preferably -40% or more and 0% or less and more preferably -30% or more and 0% or less.

When ΔEB is closer to 0%, a vulcanized rubber composition has more durability against tensile force. ΔEB is preferably -50% or more and 0% or less and more preferably -40% or more and 0% or less.

### <Exothermal property>

When a rubber composition is used as a raw material of a tire, it is desirable that the exothermal property of the tire is lower, since when the exothermal property of the tire is high, the running energy of an automobile is consumed by rising in temperature of the tire. According to the method of the present invention, not only durability but also an effect of suppressing an exothermal property can be imparted to a rubber composition.

The present invention will be explained more specifically based on examples and comparative examples, but the present invention is not limited to them.

The tensile properties of a rubber composition in examples and comparative examples were evaluated according to methods shown below.

### [Tensile property (durability test)]

The tensile properties (TS, EB) of a rubber composition were measured using a test piece having the shape of dumbbell No. 3 according to JIS K 6251.

### [Production Example 1, Production of sodium salt of S-(3-aminopropyl)thiosulfuric acid]

A reaction container was purged with nitrogen, and into the reaction container were charged 25 g (0.11 mol) of 3-bromopropylamine bromate, 28.42 g (0.11 mol) of sodium thiosulfate-pentahydrate, 125 mL of methanol and 125 mL of water. The obtained mixture was refluxed at 70°C for 4.5 hours. The obtained reaction mixture was left to cool, and methanol was removed under reduced pressure. To the mixture after removal of methanol, 4.56 g of sodium hydroxide was added. The obtained mixture was stirred at room temperature for 30 minutes, then, the solvent was removed completely under reduced pressure. To the residue was added 200 mL of ethanol and the mixture was refluxed for 1 hour. Thereafter, sodium bromide as a by-product was removed by thermal filtration. The filtrate was concentrated under reduced pressure until precipitation of a crystal, and then, allowed to stand still. The crystal was isolated by filtration. The isolated crystal was washed with ethanol, then with hexane, then, dried in a vacuum to obtain a sodium salt of S-(3-aminopropyl)thiosulfuric acid.
¹H-NMR (270.05 MHz, CH₃OD) δₚₚₘ: 3.1 (2H, t, J = 6.3 Hz), 2.8 (2H, t, J = 6.2 Hz), 1.9-2.0 (2H, m)

Using SALD-2000J type manufactured by Shimadzu Corporation, the median diameter (50%D) of the obtained sodium salt of S- (3-aminopropyl) thiosulfuric acid was measured by a laser diffractometry, to find that the median diameter (50%D) was 66.7 µm. The obtained sodium salt of S-(3-aminopropyl)thiosulfuric acid was pulverized to give a median diameter (50%D) of 14.6 µm, and used in Example 1.

### <Measurement operation>

The obtained sodium salt of S-(3-aminopropyl)thiosulfuric acid was dispersed at room temperature in a mixed solution composed of a dispersion solvent (toluene) and a dispersing agent (10 wt% di-2-ethylhexyl sulfosuccinate sodium salt/toluene solution). The obtained dispersion was stirred for 5 minutes while being exposed to an ultrasound, to obtain a test solution. The test solution was transferred into a batch cell, and after one minute, subjected to measurement (refractive index: 1.70-0.20 i).

pH of an aqueous solution obtained by dissolving 10.0 g of sodium salt of S-(3-aminopropyl)thiosulfuric acid in 30 mL of water was 11 to 12.

### [Example 1]

### <Pre-kneading step A>

Into a Banbury mixer (600 mL Laboplastomill manufactured by Toyo Seiki Co. , Ltd.), 100 parts by weight of natural rubber (RSS#1) was introduced at a mixer revolution of 25 rpm for 1 minute. The temperature of the Banbury mixer was 120°C.

Next, the introduced natural rubber was masticated at a mixer revolution of 50 rpm for 3 minutes. Thereafter, while the above-described natural rubber was kneaded at a mixer revolution of 10 rpm, 45 parts by weight of carbon black (manufactured by Asahi Carbon Co. , Ltd. , trade name "HAF Black N330"), 3 parts by weight of stearic acid, 5 parts by weight of zinc white (zinc oxide) and 0.4 parts by weight of the sodium salt of S-(3-aminopropyl)thiosulfuric acid obtained in the above-described Production Example 1 were introduced into natural rubber.

After introduction of the above-described carbon black and the like, the mixture was kneaded for 3 minutes, thereafter, kneaded for 5 minutes at a mixer revolution increased to 50 rpm, to obtain a kneaded substance A. The temperature of the kneaded substance A in kneading was 170°C. Further, the kneaded substance A was allowed to pass through open rolls, to process it into the shape of a sheet.

### <Post-kneading step B>

The obtained kneaded substance A, 2 parts by weight of sulfur, 3 parts by weight of a vulcanization accelerator (N-cyclohexyl-2-benzothiazolesulfenamide) and 1 part by weight of an anti-aging agent (N-phenyl-N'-1,3-dimethylbutyl-p-phenylenediamine: trade name "Antigen (registered trademark) 6C" manufactured by Sumitomo Chemical Co., Ltd.) were compounded and kneaded in an open roll machine at a temperature of 60 to 80°C, to obtain a kneaded substance B. Further, the kneaded substance B was processed into the shape of a sheet of 2.0 mm.

### <Thermal treatment step C>

Using a pressurization press, a vulcanization treatment of the kneaded substance B was carried out at 145°C for a vulcanization time of 12.5 minutes, to obtain a vulcanized rubber composition.

The tensile properties and the exothermal property of the obtained vulcanized rubber composition were measured. The results are shown in Table 1.

### [Comparative Example 1]

The same kneading procedure as in Example 1 was carried out excepting that the sodium salt of S-(3-aminopropyl)thiosulfuric acid was not compounded in the pre-kneading step A and the vulcanization time was changed to 13.0 minutes in the thermal treatment step C in Example 1, to obtain a vulcanized rubber composition. The tensile properties of the obtained vulcanized rubber composition were measured. The results are shown in Table 1.

**[Table 1]**

| | Tensile properties | |
|---|---|---|
| | 100°C×72 Hr | |
| | TS | EB |
| | ΔTS (%) | ΔEB (%) |
| Example 1 | -26.4 | -45.0 |
| Comparative Example 1 | -50.9 | -60.0 |

It is apparent from Table 1 that ΔTS in Example 1 is about 1/2 of ΔTS in Comparative Example 1, thus, the tensile property is improved by compounding the sodium salt of S-(3-aminopropyl)thiosulfuric acid. Also with respect to ΔEB, it is -45.0% in Example 1, smaller as compared with -60.0% in Comparative Example 1.

Further, the exothermal property is also smaller in Example 1, indicating a preferable result.

### Industrial Applicability

The present invention is capable of providing a method for imparting durability to a rubber composition, and the present invention can be used in the field using a rubber composition, especially in the field of a tire.

## Claims

1. A method for using S-(3-aminopropyl)thiosulfuric acid and/or a metal salt thereof added to a rubber component as a raw material of a vulcanized rubber composition, comprising
a pre-kneading step A of kneading a rubber component, a filler and S- (3-aminopropyl) thiosulfuric acid and/or a metal salt thereof,
a post-kneading step B of kneading the kneaded substance A obtained in the pre-kneading step A, a sulfur component, and a vulcanization accelerator having a weight over the weight of said sulfur component, and
a thermal treatment step C of thermally-treating the kneaded substance B obtained in the post-kneading step B to obtain a vulcanized rubber composition, wherein durability is imparted to the vulcanized rubber composition.

2. The method for using according to Claim 1, wherein the weight of S-(3-aminopropyl)thiosulfuric acid and/or a metal salt thereof with respect to 1 part by weight of the sulfur component is 0.05 parts by weight or more and 2.5 parts by weight or less.

3. The method for using according to Claim 1 or 2, wherein the weight of the vulcanization accelerator with respect to 1 part by weight of the sulfur component is over 1 part by weight and 2 parts by weight or less.
